# EUROPÄISCHE PATENTANMELDUNG

(11) **EP 1 457 742 A1**
(43) Veröffentlichungstag der Anmeldung: **15.09.2004**
(21) Anmeldenummer: 04003216.1
(22) Anmeldetag: 13.02.2004
(51) Int. Cl.: F24D 3/14

(54) **Raumkühlungssystem**

(30) Priorität: 14.03.2003 DE 10311214
(71) Anmelder: Jolly, Jürgen, 66299 Friedrichsthal (DE)
(72) Erfinder: Jolly, Jürgen, 66299 Friedrichsthal (DE)
(74) Vertreter: Bernhardt, Winfrid, Dr.-Ing.

(57) **Zusammenfassung**

Die Erfindung betrifft ein Raumkühlungssystem. Erfindungsgemäß ist innerhalb einer Raumwand, vorzugsweise einer Deckenwand (9), ein von einem Kühlmittel durchströmtes Kühlungselement (1) angeordnet. Vorzugsweise weist das Kühlungselement (1) eine Trägermatte (4) und an der Trägermatte befestigte Kühlrohre (5,6) auf und ist in eine Deckenputzschicht (12) eingebettet.

## Beschreibung

Die Erfindung betrifft ein Raumkühlungssystem.

Der Erfindung liegt die Aufgabe zugrunde, ein neues Raumkühlungssystem, insbesondere für Wohnräume, zu schaffen, das effektiv arbeitet und sich kostengünstig installieren lässt.

Das diese Aufgabe lösende Raumkühlungssystem nach der Erfindung ist gekennzeichnet durch ein flaches, innerhalb einer Raumwand angeordnetes Kühlungselement.

Vorteilhaft lässt sich ein solches, vorzugsweise von einem Kühlmittel durchströmtes Kühlungselement z.B. im Zuge der Errichtung von Gebäuden mit verhältnismäßig geringem Zusatzaufwand in Raumwände einbauen. Ohne Beeinträchtigung des nutzbaren Raumvolumens können auf diese Weise in Räumen große kühlungswirksame Flächen gebildet werden.

Zur Installation des Kühlungselements bietet sich insbesondere die Deckenwand an. Vorteilhaft kommt es in diesem Fall durch aufsteigende Warmluft und von der kühlen Decke absinkende Kaltluft zu einer intensiven, die Raumkühlung fördernden Luftzirkulation.

Zweckmäßig ist das Kühlungselement nahe der Wandoberfläche in das Mauerwerk eingebettet. In einer bevorzugten Ausführungsform der Erfindung erfolgt eine Einbettung in eine Wandputzschicht. Hierzu eignet sich insbesondere ein Kühlungselement, das durch wenigstens eine vorgefertigte Bahn aus einer flexiblen Trägermatte und wenigstens einem an der Trägermatte befestigten, flexiblen Kühlrohr gebildet ist. Bei einem Rohrdurchmesser kleiner 6 mm und einer Mattendicke kleiner 1 mm lässt sich ein solches Kühlungselement ohne weiteres in einer Putzschicht unterbringen, deren Dicke in dem für solche Schichten normalen Bereich liegt.

Vorzugsweise ist die Trägermatte rasterartig durchbrochen und weist insbesondere eine Netzstruktur auf. Eine solche, z.B. durch ein Gewebe gebildete Matte wird vom Putzmaterial durchdrungen, und es lässt sich durch die Matte hindurch eine feste Verbindung zwischen dem Putzmaterial und dem Putzuntergrund herstellen. Vorteilhaft fördert die Matte einerseits die Anbindung des Putzes an den Putzuntergrund und bildet andererseits eine die Putzschicht als solche festigende Armierung.

Auf ihrer dem Putzuntergrund abgewandten Seite können von der Matte ferner z.B. stiftartige Verbindungselemente vorstehen, die vorzugsweise hinterschnitten sind und sich dadurch im Putz verhaken.

In weiterer Ausgestaltung der Erfindung ist das Kühlungselement zur Verklebung mit oder/und Anheftung an einen Putzuntergrund oder/und Vorputz vorgesehen.

Das Kühlungselement, insbesondere die Trägermatte, kann selbstklebend mit einer Klebeschicht vorgefertigt sein, wobei diese Klebeschicht vorzugsweise mit einer vor Ort abziehbaren Schutzfolie bedeckt ist. Somit lassen sich selbstklebende, vorzugsweise zu einer Rolle aufgewickelte Bahnen vorfertigen, die zur Verklebung mit dem Putzuntergrund von der Rolle z.B. durch Ausrollen der Rolle abgewickelt werden. An den Deckenenden wird die Trägermatte jeweils durchtrennt und ggf. ein weiterer Bahnabschnitt in entgegengesetzter Richtung ausgerollt, wobei das flexible Kühlrohr von Bahnabschnitt zu Bahnabschnitt durchgehend weitergeführt werden kann.

Die zum Kleben zusätzliche oder alternative Anheftung kann durch Nageln erfolgen, wobei z.B. bügelartige Nagelelemente durch die Trägermatte hindurch in den Putzuntergrund oder Vorputz mit Hilfe eines Nagelgeräts eingeschossen werden.

Auf der genannten Bahn bzw. Trägermatte können z.B. zwei Kühlrohre parallel zueinander verlegt sein, wobei die Kühlrohre in entgegengesetzten Richtungen durchströmt werden und jedes Kühlrohr sowohl an einen Kühlmittelvorlauf als auch einen -rücklauf angeschlossen ist. Durch die gegenläufigen Kühlmittelströme kommt es zu einer über die Fläche des Kühlungselements gleichmäßigen Wärmeabfuhr.

Die Verlegung weiterer Kühlrohre ist denkbar. Insbesondere in diesem Fall erscheint es zweckmäßig, die Kühlrohre parallel zueinander im Abstand zu verlegen, um auch zwischen den Rohren eine Anbindung des Putzes an den Putzuntergrund und damit stabile Putzschicht zu ermöglichen.

Kühlungselemente mehrerer Räume können durch in Gebäudewänden verlegte Vor- und Rücklaufrohre mit einem zentralen, kälteerzeugenden Aggregat verbunden sein. Das neue Kühlungssystem, welches die Bildung großer Kühlflächen ermöglicht, lässt jedoch auch die Nutzung von Kältereservoiren zu, deren Temperatur nur knapp unter der gewünschten Zieltemperatur im Raum liegt. Als Kältereservoir kommt z.B. ein Brunnen oder ein fließendes Gewässer mit einer Temperatur um 20° in Betracht. Auch die Verbindung des Kühlelements mit einem im Boden versenkten Wärmetauscher ist denkbar.

Die Erfindung soll nun anhand eines Ausführungsbeispiels und der beiliegenden, sich auf dieses Ausführungsbeispiel beziehenden Zeichnungen näher erläutert werden. Es zeigen:
- Fig. 1: ein in einem Raumkühlungssystem nach der Erfindung verwendbares Kühlungselement,
- Fig. 2: ein Detail A des Kühlungselements von Fig. 1,
- Fig. 3: eine die Installation eines Kühlungselements gemäß Fig. 1 und 2 erläuternde Darstellung,
- Fig. 4: eine Teilansicht des Kühlungselements von Fig. 1, welches in die Putzschicht einer Raumdecke eingebettet ist, und
- Fig. 5: eine schematische Gesamtansicht eines Raumkühlungssystems nach der Erfindung mit Kühlungselementen gemäß Fig. 1 bis 4.

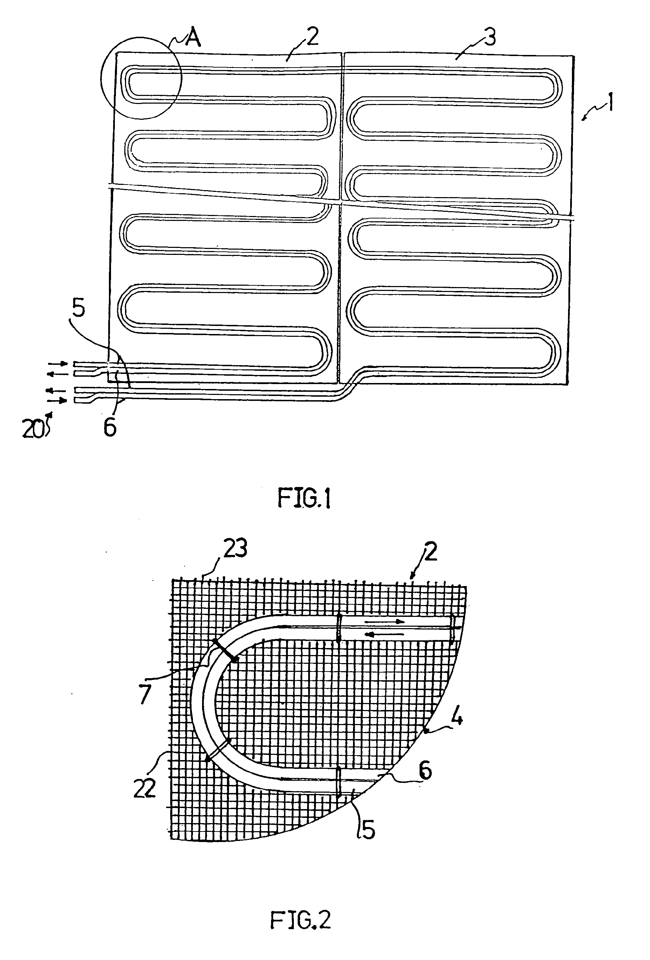

Das in Fig. 1 gezeigte Kühlungselemente 1 weist zwei vorgefertigte, längsseitig aneinanderstoßende Bahnen 2 und 3 auf. Wie die Detaildarstellung von Fig. 2 erkennen lässt, bestehen die Bahnen 2 und 3 aus einer Gewebeträgermatte 4 mit sich kreuzenden Strängen aus Kunststoff, in dem betreffenden Ausführungsbeispiel PVCbeschichtetes Glasgewebe. Bei einer Maschenweite von etwa 5 mm beträgt die Gesamtdicke der Matte etwa 1 mm.

An der flexiblen Gewebeträgermatte 4 sind mittels Schlaufen 7 zwei sich durchgehend über beide Trägerbahnen erstreckende Kühlrohre 5 und 6 aus Polyethylen befestigt, welche zueinander parallel verlaufen und entlang einer Mantellinie gegeneinander anliegen. In dem betreffenden Ausführungsbeispiel beträgt der Rohraußendurchmesser 6 mm bei einer Rohrinnenweite von 4 mm.

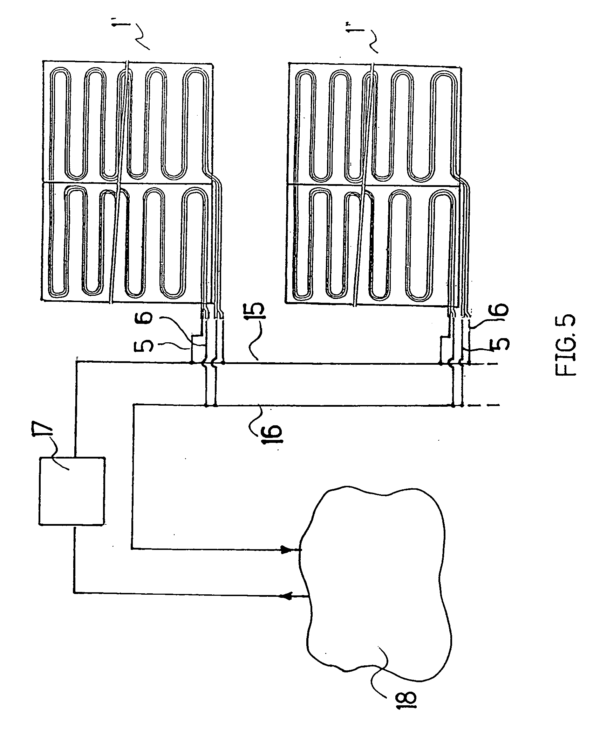

Wie in Fig. 1 durch Pfeile angedeutet und in Fig. 5 dargestellt ist, steht ein Ende des Rohres 5 in Verbindung mit einem Kühlmittelvorlauf 15 und ein benachbartes Ende des Kühlrohres 6 in Verbindung mit einem Kühlmittelrücklauf 16. An dem Kühlmittelrücklauf 16 ist auch das andere Ende des Kühlrohres 5 angeschlossen, welches zu dem Ende des Kühlrohres 6 benachbart ist, das mit dem Kühlmittelvorlauf 15 in Verbindung steht. Somit weist das Kühlungselement 1 zwei durch die Rohre 5 und 6 gebildete Kühlkreisläufe auf, welche in entgegengesetzten Richtungen durchströmt werden.

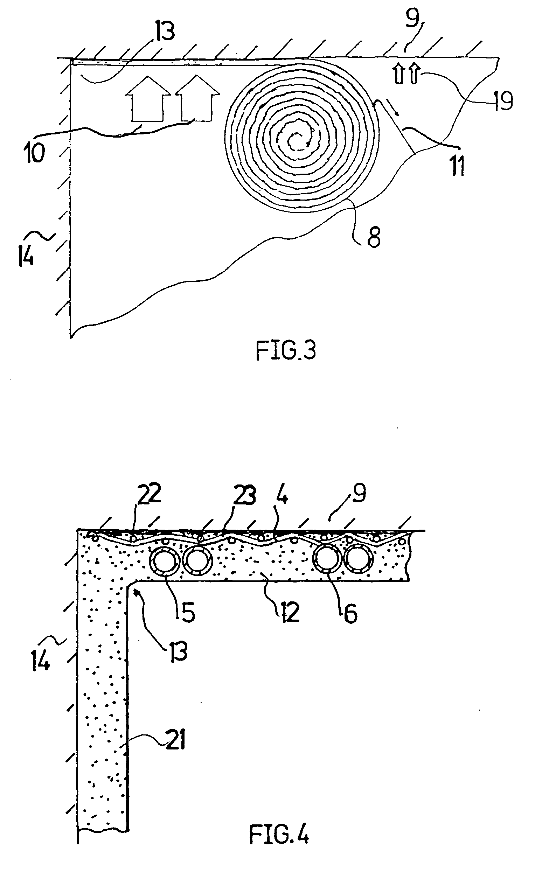

Die Trägerbahnen 2 und 3 sind gemäß Fig. 3 von einer vorgefertigten Rolle 8 abgewickelt, und über eine nicht gezeigte, bei der Vorfertigung erzeugte Klebeschicht auf der Gewebeträgermatte 4 mit der unverputzten Oberfläche einer z.B. durch Betonbauelemente gebildeten Deckenwand 9 verklebt. Die Verklebung erfolgt durch Ausübung von Druckkräften gemäß Pfeilen 10 ähnlich der Verarbeitung von Tapete. Während der Verklebung kann eine weitere Arbeitskraft unter Abwicklung der Bahn 2 bzw. 3 die Rolle 8 auf der Deckenwand 9 abrollen, wobei gleichzeitig eine die genannte Klebeschicht abdeckende Schutzfolie 11 von der Rolle abgezogen wird.

Abweichend von dem gezeigten Ausführungsbeispiel könnte statt der Vorfertigung einer selbstklebenden Bahn die Gewebeträgermatte vor Ort wie eine Tapetenbahn mit einem Kleber bestrichen werden. Alternativ oder zusätzlich ließe sich gemäß Pfeilen 19 ein Kleber auch auf die noch unverputzte Deckenwand aufbringen.

In dem gezeigten Ausführungsbeispiel gemäß Fig. 1 wird zur Bildung der Bahnen bzw. Bahnabschnitte 2 und 3 die Gewebeträgermatte 4 durchtrennt, während die Rohre 5 und 6 durchgehend zum jeweils nächsten Bahnabschnitt weitergeführt werden.

Anders als vorangehend beschrieben, könnten die Bahnen 2 und 3 vor der Verklebung mit der Deckenwand 9 in der vollen erforderlichen Länge abgerollt werden. In diesem Falle wären die Rohre 5 und 6 an den Trennstellen zwischen den Bahnen über Verbindungsstücke aneinander anzuschließen.

Das mit der Deckenwand 9 verklebte, aus zwei Bahnen 2 und 3 gebildete Kühlungselement 1 wird gemäß Fig. 4 abschließend in eine Deckenputzschicht 12 eingebettet, welche in einer oberen Raumecke 13 in eine Putzschicht 21 einer Raumseitenwand 14 übergeht.

Gemäß Fig. 5 können mehrere Kühlungselemente 1',1'' usw. an einen Kühlmittelvorlauf 15 und einen Kühlmittelrücklauf 16 angeschlossen sein, wobei der Vorlauf über eine Kühlmittel im Umlauf haltende Pumpe 17 mit einem Kältereservoir 18 in Verbindung steht.

## Patentansprüche

1. Raumkühlungssystem,
**gekennzeichnet durch** ein flaches, innerhalb einer Raumwand (9) angeordnetes Kühlungselement (1).

2. Raumkühlungssystem nach Anspruch 1,
**dadurch gekennzeichnet,**
**dass** die Raumwand eine Deckenwand (9) ist.

3. Raumkühlungssystem nach Anspruch 1 oder 2,
**dadurch gekennzeichnet,**
**dass** das Kühlungselement (1) in die Raumwand (9) eingebettet ist.

4. Raumkühlungssystem nach Anspruch 3,
**dadurch gekennzeichnet,**
**dass** das Kühlungselement (1) in eine Putzschicht (12) der Raumwand (9) eingebettet ist.

5. Raumkühlungssystem nach einem der Ansprüche 1 bis 4,
**dadurch gekennzeichnet,**
**dass** das Kühlungselement (1) durch wenigstens eine vorgefertigte Bahn (2,3) aus einer Trägermatte (4) und wenigstens einem an der Trägermatte befestigten Kühlrohr (5,6) gebildet ist.

6. Raumkühlungssystem nach Anspruch 5,
**dadurch gekennzeichnet,**
**dass** die Trägermatte (4) Durchbrüche in einer Rasteranordnung und vorzugsweise eine Netzstruktur aufweist.

7. Raumkühlungssystem nach Anspruch 5 oder 6,
**dadurch gekennzeichnet,**
**dass** von der Trägermatte, vorzugsweise hinterschnittene, Verbindungselemente zur Anbindung der Putzschicht an die Trägermatte vorstehen.

8. Raumkühlungssystem nach einem der Ansprüche 1 bis 7,
**dadurch gekennzeichnet,**
**dass** das Kühlungselement (1) zur Verklebung mit oder zur Anheftung an einen Putzuntergrund oder/und Vorputz vorgesehen ist.

9. Raumkühlungssystem nach Anspruch 8,
**dadurch gekennzeichnet,**
**dass** das Kühlungselement (1) selbstklebend mit einer Klebeschicht vorgefertigt ist.

10. Raumkühlungssystem nach Anspruch 9,
**dadurch gekennzeichnet,**
**dass** die Klebeschicht mit einer vor der Verklebung abziehbaren Schutzfolie (11) abgedeckt ist.
